# EUROPÄISCHE PATENTANMELDUNG

(11) **EP 4 697 423 A1**
(43) Veröffentlichungstag der Anmeldung: **18.02.2026**
(21) Anmeldenummer: 24194421.4
(22) Anmeldetag: 13.08.2024
(51) Int. Cl.: H01M 10/052, H01M 50/107, H01M 50/152, H01M 50/167, H01M 50/184

(54) **ENERGIESPEICHERELEMENT UND VERFAHREN ZUR HERSTELLUNG EINES ENERGIESPEICHERELEMENTS**

(71) Anmelder: VARTA Microbattery GmbH, 73479 Ellwangen Jagst (DE)
(72) Erfinder: Drews, Verena, Giengen 89537 (DE); Frank, Waldemar, 73479 Ellwangen (DE); Geiger, Michael, 73479 Ellwangen (DE); Kieninger, Dominik, 73492 Rainau (DE); Rieker, Patrick, 73479 Ellwangen (DE)
(74) Vertreter: Ostertag & Partner Patentanwälte mbB

(57) **Zusammenfassung**

Es wird ein Energiespeicherelement mit einem Gehäuse (102) beschrieben, das eine Längsachse (100a) des Energiespeicherelements (100) und einen Innenraum (102a) definiert sowie einen metallischen Gehäusebecher (104) und eine Deckelbaugruppe umfasst, welche den Gehäusebecher (104) verschließt. Eine Dichtungsanordnung mit einer Dichtung (112) umgibt die Deckelbaugruppe (108) radial und dichtet gegen den Gehäusebecher (104) ab, wobei die Dichtung (112) durch einen freien, radial nach innen umgebogenen Endabschnitt (160) des Gehäusebechers (104) gegen die Deckelbaugruppe (108) komprimiert ist. In dem Gehäusebecher (104) ist ein Elektroden-Separator-Verbund (114) mit der Sequenz Anode (116) / Separator (138) / Kathode (126) / Separator (140) untergebracht, der in Form eines zylindrischen Wickels (136) vorliegt. Die Anode (116) umfasst einen Anodenstromkollektor (118), der einen bandförmigen Hauptbereich (120) hat, der mit einer Schicht aus negativem Elektrodenmaterial (122) beladen ist, und der einen freien Randstreifen (124) hat, der nicht mit dem Elektrodenmaterial (122) beladen ist und einen ersten Längsrand (118a) des Anodenstromkollektors (118) umfasst, wobei der freie Randsteifen (124) aus einer ersten endständigen Stirnseite (114a) des Elektroden-Separator-Verbundes (114) austritt und an der ersten Stirnseite (114a) einen Überstand (141a) bildet. Die Kathode (126) umfasst einen Kathodenstromkollektor (128), der einen bandförmigen Hauptbereich (130) hat, der mit einer Schicht aus positivem Elektrodenmaterial (132) beladen ist, und der einen freien Randstreifen (134) hat, der nicht mit dem Elektrodenmaterial (132) beladen ist und einen ersten Längsrand (128a) des Kathodenstromkollektors (128) umfasst, wobei der freie Randstreifen (134) aus einer zweiten endständigen Stirnseite (114a) des Elektroden-Separator-Verbundes (114) austritt und an der zweiten Stirnseite (114b) einen Überstand (1421b) bildet. Ein Kontaktblechteil (142) sitzt auf dem Überstand (141a) des Anodenstromkollektors (118) auf und deckt die erste endständige Stirnseite (114a) des Elektroden-Separator-Verbundes (114) ab und ist mit diesem verbunden oder sitzt auf dem Überstand (141b) des Kathodenstromkollektors (128) auf und deckt die zweite endständige Stirnseite (114b) des Elektroden-Separator-Verbundes (114) ab und ist mit diesem verbunden. Der mit dem Kontaktblechteil (142) verbundene Überstand (141a, 141b) ist ein in axialer Richtung komprimierter Überstand (172). Der Gehäusebecher (104) ist ohne eine Werkzeug-Eingreifstruktur (164) ausgebildet. Außerdem ist ein Verfahren zur Herstellung einer derartigen Energiespeicherelements beschrieben.

## Beschreibung

### HINTERGRUND DER ERFINDUNG

### Gebiet der Erfindung

Die Erfindung betrifft ein Energiespeicherelement mit
a) einem Gehäuse, das eine Längsachse des Energiespeicherelements und einen Innenraum definiert sowie einen metallischen Gehäusebecher und eine Deckelbaugruppe umfasst, welche den Gehäusebecher verschließt;
b) einer Dichtungsanordnung mit einer Dichtung, welche die Deckelbaugruppe radial umgibt und gegen den Gehäusebecher abdichtet, wobei die Dichtung durch einen freien, radial nach innen umgebogenen Endabschnitt des Gehäusebechers gegen die Deckelbaugruppe komprimiert ist;
c) einem Elektroden-Separator-Verbund mit der Sequenz Anode / Separator / Kathode / Separator, der in dem Gehäusebecher untergebracht ist und in Form eines zylindrischen Wickels vorliegt, wobei
   c1) die Anode einen Anodenstromkollektor umfasst, der einen bandförmigen Hauptbereich hat, der mit einer Schicht aus negativem Elektrodenmaterial beladen ist, und der einen freien Randstreifen hat, der nicht mit dem Elektrodenmaterial beladen ist und einen ersten Längsrand des Anodenstromkollektors umfasst, wobei der freie Randstreifen aus einer ersten endständigen Stirnseite des Elektroden-Separator-Verbundes austritt und an der ersten Stirnseite einen Überstand bildet;
   c2) die Kathode einen Kathodenstromkollektor umfasst, der einen bandförmigen Hauptbereich hat, der mit einer Schicht aus positivem Elektrodenmaterial beladen ist, und der einen freien Randstreifen hat, der nicht mit dem Elektrodenmaterial beladen ist und einen ersten Längsrand des Kathodenstromkollektors umfasst, wobei der freie Randstreifen aus einer zweiten endständigen Stirnseite des Elektroden-Separator-Verbundes austritt und an der zweiten Stirnseite einen Überstand bildet;
d) einem Kontaktblechteil, das
   d1) auf dem Überstand des Anodenstromkollektors aufsitzt und die erste endständige Stirnseite des Elektroden-Separator-Verbundes abdeckt und mit diesem verbunden ist;
      oder
   d2) auf dem Überstand des Kathodenstromkollektors aufsitzt und die zweite endständige Stirnseite des Elektroden-Separator-Verbundes abdeckt und mit diesem verbunden ist.

Außerdem betrifft die Erfindung die Herstellung eines solchen Energiespeicherelements mit den Schritten:
(A) Bereitstellen des Gehäuses mit dem metallischen Gehäusebecher und der Deckelbaugruppe;
(B) Bereitstellen der Dichtungsanordnung mit der Dichtung und Bereitstellen des Stützrings;
(C) Bereitstellen des Elektroden-Separator-Verbundes;
(D) Verbinden, insbesondere Verschweißen, des Kontaktblechteils mit dem Randstreifen des Anodenstromkollektors oder mit dem Randstreifen des Kathodenstromkollektors
(E) Positionieren der Dichtung und des Stützrings;
(F) Verbinden der Deckelbaugruppe mit dem Kontaktblechteil;
(G) Verschließen des Gehäusebechers.

### Beschreibung des Standes der Technik

Ein Energiespeicherelement der eingangs genannten Art ist beispielsweise in der europäischen Patentanmeldung Nr. 23190399.8 der vorliegenden Anmelderin beschrieben.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle (im Folgenden auch als Energiespeicherzelle bezeichnet). Sie umfasst eine positive und eine negative Elektrode, die über einen ionenleitenden Elektrolyten miteinander verbunden sind. Zur elektrischen Trennung kann zwischen den Elektroden ein Separator angeordnet sein. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom via den ionenleitenden Elektrolyten innerhalb der Zelle.

Energiespeicherelemente können mehr als eine einzelne elektrochemische Zelle umfassen, beispielsweise zwei oder mehr parallel oder seriell miteinander verbundene Energiespeicherzellen. Ein solches Energiespeicherelement mit mehreren Zellen bezeichnet man auch als Batterie.

Wenn die beschriebene Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein.

Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen und auch bei der vorliegenden Erfindung wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator/ negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in elektrischen Werkzeugen, werden Lithium-Ionen-Zellen mit möglichst hoher Energiedichte benötigt, die gleichzeitig in der Lage sind, mit hohen Strömen beim Laden und Entladen belastet zu werden.

Energiespeicherzellen mit einem Elektroden-Separator-Verbund in Form eines Wickels für die genannten Anwendungen sind als zylindrische Rundzellen ausgebildet, die häufig eine Länge bzw. Höhe zwischen 50 mm bis 150 mm und einen Durchmesser im Bereich von 15 mm bis 60 mm haben. Moderne Lithium-lonen-Zellen mit beispielsweise dem Formfaktor 21 × 70 (Durchmesser mal Höhe in mm) können eine Energiedichte von bis zu 270 Wh/kg erreichen.

Mit Blick auf die Kapazität und Leistung einer Energiespeicherzelle ist der Volumenanteil des Innenraums des Gehäuses, der für den Wickel genutzt werden kann, besonders wichtig. Je grö-ßer dieses Volumen bei bis auf den Wickel unveränderten Abmessungen und Komponenten der Energiespeicherzelle ist, desto höher ist deren Kapazität und Leistung, wenn in einem grö-ßeren Volumen ein entsprechend größerer Wickel angeordnet wird.

### ZUSAMMENFASSUNG DER ERFINDUNG

Es ist Aufgabe der Erfindung, ein Energiespeicherelement, insbesondere eine Energiespeicherzelle, bereitzustellen, welche diesem Gedanken Rechnung trägt, und ein darauf abgestimmtes Verfahren zu schaffen.

Diese Aufgabe wird bei dem Energiespeicherelement dadurch gelöst, dass
e) der mit dem Kontaktblechteil verbundene Überstand ein in axialer Richtung komprimierter Überstand ist;
f) der Gehäusebecher ohne eine Werkzeug-Eingreifstruktur ausgebildet ist.

Der Gehäusebecher umfasst bevorzugt einen kreisförmigen Boden und eine Seitenwand sowie eine endständige, kreisförmige Öffnung, welche durch die Deckelbaugruppe verschlossen ist.

Vorzugsweise umfasst der Gehäusebecher des erfindungsgemäßen Energiespeicherelements in axialer Abfolge den Boden, einen von der Seitenwand gebildeten Zentralabschnitt und einen Verschlussabschnitt. In bevorzugten Ausführungsformen gilt mindestens eines der folgenden Merkmale:
- Der Zentralabschnitt ist hohlzylindrisch ausgebildet.
- In dem Zentralabschnitt steht der Mantel des als zylindrischer Wickel ausgebildeten Elektroden-Separator-Verbunds mit der Innenseite des Gehäusebechers in Kontakt.
- Der radial nach innen umgebogene Endabschnitt des Gehäusebechers definiert die kreisförmige Öffnung.
- Die Deckelbaugruppe ist einschließlich der Dichtung, die im Übrigen vorzugsweise ringförmig ausgebildet ist, von dem radial nach innen umgebogenen Endabschnitt in der kreisförmigen Öffnung des Gehäusebechers formschlüssig fixiert.

Beim Aufbau des eingangs genannten Energiespeicherelements wird insbesondere auf herkömmliche Bördelungsverfahren zurückgegriffen, um den Gehäusebecher mit der Deckelbaugruppe zu verschließen. Dabei wird der zunächst zylindrische freie Endabschnitt des Gehäusebechers radial nach innen über einen Bereich der Deckelbaugruppe umgebogen, wobei die Dichtung komprimiert wird. Details hierzu werden noch erläutert.

Dabei befindet sich der Wickel bereits in dem Gehäusebecher. Unter anderem um zu vermeiden, dass der Wickel bei dem Bördelungsverfahren beschädigt wird, wird in dem Gehäusebecher bei bekannten Energiespeicherelementen eine Werkzeug-Eingreifstruktur erzeugt. Die Werkzeug-Eingreifstruktur hat die Funktion, dass an das Gehäuse ein Teil eines Bördelwerkzeugs angesetzt werden kann, wenn der Gehäusebecher durch das Bördelungsverfahren verschlossen wird. In die Werkzeug-Eingreifstruktur greift beim Verschließen des Gehäusebechers als Teil des Bördelwerkzeugs beispielsweise ein Konter-Werkzeug ein, welches den Gehäusebecher im Rahmen eines Kontervorgangs in axialer Richtung gegen die beim Bördelungsverfahren einwirkende Kraft abstützt und diese Kraft ableitet, so dass der Wickel weitgehend frei von einer Krafteinwirkung bleibt. Üblicherweise ist hierfür zum Zeitpunkt des Verschließens eine in Umfangsrichtung vollständig umlaufende Sicke im Gehäusebecher vorgesehen, die auch nach der Herstellung des Energiespeicherelements verbleibt.

Da diese Sicke gegenüber der sonstigen Wand des Gehäusebechers radial in den Innenraum des Gehäuses hineinragt, steht der Bereich, in dem die Sicke ausgebildet ist, nicht für den Wickel zur Verfügung, da dieser den Gehäusebecher radial voll ausfüllt.

Ein Umbiegen des Randstreifens ist beispielsweise in der europäischen Patentanmeldung Nr. 23202968.6 der vorliegenden Anmelderin mit dem Ziel beschrieben, dass der Radius des Kontaktblechteils spürbar kleiner sein kann als der Wickeldurchmesser, um die Gefahr zu verringern, dass das Kontaktblechteil das Gehäuse kontaktiert.

Erfindungsgemäß wurde jedoch hierüber hinausgehend erkannt, dass ein Wickel, dessen mit dem Kontaktblechteil verbundener Randstreifen umgebogen oder in axialer Richtung gestaucht, geknickt, oder auf sonstige Weise deformiert ist, und allgemein ein Wickel mit einem in axialer Richtung komprimierten Überstand, mit den beim Verschließen des Gehäusebechers auftretenden Kräften belastet werden kann, ohne dass dies negative Auswirkungen auf die Funktion des Energiespeicherelements hat. Es wurde weitergehend erkannt, dass eine weitere Abstützung gegen die beim Verschließen auftretenden Kräfte nicht notwendig ist und auf eine Werkzeug-Eingreifstruktur verzichtet werden kann.

Hierdurch wird in axialer Richtung Raum für den Wickel frei, so dass das Energiespeicherelement, insbesondere die Energiespeicherzelle, bei ansonsten unveränderten Innenmaßen mit einem Wickel bestückt werden kann, bei dem die Hauptbereiche der Anode und der Kathode eine größere axiale Erstreckung haben. Da diese Hauptbereiche das Elektrodenmaterial tragen, erhöht dies unmittelbar die Kapazität und Leistung des Energiespeicherelements.

In bevorzugten Ausführungsformen verwendet man für den Elektroden-Separator-Verbund bandförmige Separatoren, die etwas breiter sind als die Elektroden des Wickels. Die Längsränder dieser Separatoren liegen bevorzugt in einer Ebene und bilden bevorzugt die Stirnseiten des Wickels.

Es ist weiterhin bevorzugt, dass die aus den endständigen Stirnseiten des Wickels oder Seiten des Stapels austretenden freien Randstreifen der Stromkollektoren in undeformiertem Zustand, also vor der axialen Komprimierung des Überstands, nicht mehr als 5500 µm, bevorzugt nicht mehr als 4000 µm, aus den Stirnseiten oder den Seiten herausragen. Die Höhe des Überstands der freien Randstreifen beträgt somit vor der axialen Komprimierung bevorzugt maximal 5500 µm, besonders bevorzugt maximal 4000 µm. Dies gilt insbesondere für Zellen des Formats 21700 (21 mm Durchmesser, 70 mm Höhe).

Besonders bevorzugt ragt der freie Randstreifen des Anodenstromkollektors aus der Stirnseite des Wickels vor der axialen Komprimierung des Überstands nicht mehr als 3000 µm, besonders bevorzugt nicht mehr als 2000 µm, heraus. Besonders bevorzugt ragt der freie Randstreifen des Kathodenstromkollektors aus der Stirnseite des Wickels nicht mehr als 4000 µm, besonders bevorzugt nicht mehr als 3000 µm, heraus. Die Höhe des Überstands des freien Randstreifens des Anodenstromkollektors beträgt somit vor der axialen Komprimierung bevorzugt maximal 3000 µm, besonders bevorzugt maximal 2000 µm. Die Höhe des Überstands des freien Randstreifens des Kathodenstromkollektors beträgt somit vor der axialen Komprimierung bevorzugt maximal 4000 µm, besonders bevorzugt maximal 3000 µm.

Es ist bevorzugt, dass bei im Rahmen der Erfindung zum Einsatz kommenden Elektroden-Separator-Wickeln der Überstand des aus der ersten endständigen Stirnseite des Elektroden-Separator-Verbundes austretenden freien Randstreifens in axialer Richtung um mindestens 10 % und maximal 80 %, bevorzugt um 15 % bis 60 %, besonders bevorzugt um 15 % bis 50 %, komprimiert ist (bezogen auf die Höhe des Überstands vor der Komprimierung).

Es ist weiterhin bevorzugt, dass bei im Rahmen der Erfindung zum Einsatz kommenden Elektroden-Separator-Wickeln der Überstand des aus der zweiten endständigen Stirnseite des Elektroden-Separator-Verbundes austretenden freien Randstreifens in axialer Richtung um mindestens 10 % und maximal 80 %, bevorzugt um 15 % bis 60 %, besonders bevorzugt um 15 % bis 50 %, komprimiert ist (bezogen auf die Höhe des Überstands vor der Komprimierung).

Ein Überstand mit einer unkomprimierten Höhe von 3 mm kann nach der Komprimierung also beispielsweise noch eine Höhe von 1,6 mm aufweisen.

In dem als Wickel ausgebildeten Verbundkörper liegen die bandförmige Anode, die bandförmige Kathode und der oder die bandförmigen Separatoren bevorzugt spiralförmig aufgewickelt vor. Zur Herstellung des Verbundkörpers werden vorzugsweise die bandförmigen Elektroden gemeinsam mit dem oder den bandförmigen Separatoren einer Wickelvorrichtung zugeführt und bevorzugt in dieser um eine Wickelachse herum spiralförmig aufgewickelt. In einigen Ausführungsformen werden die Elektroden und der oder die Separatoren hierzu auf einen zylindrischen oder hohlzylindrischen Wickelkern aufgewickelt, der auf einem Wickeldorn sitzt und nach dem Wickeln im Wickel verbleibt.

Eine Werkzeug-Eingreifstruktur ist vorliegend definiert als Struktur in der Seitenwand des Gehäusebechers, die es erlaubt, dass besagtes Teil des Bördelwerkzeugs zwecks Durchführung eines Bördelvorgangs, insbesondere zwecks Durchführung des besagten Kontervorgangs, in sie eingreift. Hierzu muss die Struktur eine Mindesttiefe in der Seitenwand aufweisen.

Eine solche, für einen Bördelvorgang dienende Werkzeug-Eingreifstruktur kann insbesondere in einer ringförmigen Einbuchtung der Seitenwand in Form der erwähnten Sicke bestehen. Es ist aber auch denkbar, dass eine Mehrzahl von in der Seitenwand ringförmig angeordneten Einbuchtungen, beispielsweise 3, 4, 6 oder 8 Einbuchtungen, als Werkzeug-Eingreifstruktur dient.

Im Umkehrschluss bedeutet das, dass Einbuchtungen in der Seitenwand, die weniger als eine entsprechende Mindesttiefe aufweisen, nicht unter die Definition des Begriffs Werkzeug-Eingreifstruktur fallen.

Der Schutzbereich der Erfindung des geltenden Anspruchs 1 erstreckt sich damit auf Energiespeicherelemente, bei denen die Seitenwand des Gehäusebechers keine Einbuchtungen aufweist. Er erstreckt sich weiterhin auf Energiespeicherelemente, bei denen die Seitenwand des Gehäusebechers eine als Sicke ausgebildete ringförmige Einbuchtung oder mehrere ringförmig angeordnete Einbuchtungen aufweist, die weniger als besagte Mindesttiefe aufweisen.

Diese für den Bördelvorgang erforderliche Mindesttiefe ist unter der folgenden Bedingung gegeben:
Die Tiefe der ringförmigen Einbuchtung oder der ringförmig angeordneten Einbuchtungen, die als Werkzeug-Eingreifstruktur ausgebildet sind, beträgt bevorzugt mindestens das siebenfache der Wandstärke des Gehäusebechers im Bereich der Einbuchtung oder der Einbuchtungen.

Dies bedeutet wiederum im Umkehrschluss: Einbuchtungen mit einer Tiefe von weniger als dem siebenfachen der Wandstärke des Gehäusebechers im Bereich der Einbuchtung oder der Einbuchtungen sind definitionsgemäß keine Werkzeug-Eingreifstruktur im Sinne der vorliegenden Anmeldung. Weiter bevorzugt sind Einbuchtungen mit einer Tiefe von weniger als dem sechsfachen, bevorzugt mit einer Tiefe von weniger als dem fünffachen, weiter bevorzugt von weniger als dem vierfachen, nochmals bevorzugt von weniger als dem dreifachen und besonders bevorzugt von weniger als dem zweifachen der Wandstärke des Gehäusebechers im Bereich der Einbuchtung oder der Einbuchtungen keine Werkzeug-Eingreifstruktur im Sinne der vorliegenden Anmeldung.

Ungeachtet der Tiefe einer gegebenenfalls vorhandenen Einbuchtung muss eine Werkzeug-Eingreifstruktur funktional auch stets dafür ausgelegt sein, in der oben erläuterten Weise mit einem Eingreif-Werkzeug zusammenzuarbeiten.

Eine Verschlusstechnik, die zu Einbuchtungen mit solch geringer Tiefe führen kann, ist in der EP 3916877 A1 beschrieben. Nach dem Einschieben eines Elektroden-Separator-Verbunds in einen mit einer Stufe versehenen Gehäusebecher kann durch Kalibrierung des Außendurchmessers des Gehäusebechers die Stufe in eine umlaufende Einbuchtung überführt werden. Diese Einbuchtung umläuft die Seitenwand des Gehäusebechers ringförmig, weist aber nicht die Tiefe auf, die eine zum Bördeln dienende Einbuchtung haben müsste.

Die Deckelbaugruppe definiert vorzugsweise eine Verschlussebene, die in der Regel durch einen Teil der Innenseite der Deckelbaugruppe festgelegt wird, die dem Innenraum des Gehäuses zugewandt ist. Je kleiner der axiale Abstand zwischen den Hauptbereichen der Anode und der Kathode und der Verschlussebene ist, desto axial länger können die Hauptbereiche mit dem Elektrodenmaterial des Wickels sein, der bei gleichen Außenabmessungen des Gehäuses verbaut werden kann. Bei dem erfindungsgemäßen Energiespeicherelement kann ein axialer Abstand zwischen den Hauptbereichen der Anode und der Kathode und der Verschlussebene erreicht werden, der zwischen 0,6 mm und 3,0 mm, insbesondere zwischen 0,8 mm und 2,5 mm, bevorzugt zwischen 1,0 mm und 2,0 mm und vorzugsweise zwischen 1,2 mm und 1,6 mm beträgt.

Es ist weiter bevorzugt, dass die Deckelbaugruppe einen umlaufenden äußeren Verschlussring umfasst, der von der Dichtung umschlossen ist, wobei die Verschlussebene durch die zum Innenraum des Gehäuses weisende Innenseite des Verschlussrings begrenzt ist.

In besonders bevorzugten Ausführungsformen umfasst die Deckelbaugruppe eine Metallscheibe, die mit einer Distanzausgleichstruktur in einem Verbindungsbereich der Distanzausgleichsstruktur verschweißt ist, die
a) durch ein Distanzausgleichsblechteil bereitgestellt wird, das mit dem Kontaktblechteil verbunden ist; oder
b) durch das Kontaktblechteil bereitgestellt wird.

Im letzteren Fall umfasst also das Kontaktblechteil die Distanzausgleichsstruktur. Ein separates Distanzausgleichsblechteil wird dann nicht benötigt.

Umgekehrt kann das Distanzausgleichsblechteil einen Kontaktierungsbereich aufweisen, der als Kontaktblechteil fungiert und mit dem freien Randstreifen des Anodenstromkollektors oder mit dem freien Randstreifen des Kathodenstromkollektors verbunden ist.

Die Metallscheibe kann eine CID-Funktion (CID = current interupt device) bereitstellen, was im Folgenden noch näher erläutert wird.

Besonders bevorzugt zeichnet sich das Energiespeicherelement durch mindestens eines der folgenden Merkmale aus:
a) Ein Stützring ist zwischen dem Distanzausgleichsblechteil und der Metallscheibe vorgesehen ist, der ein separates Bauteil ist oder von der Dichtung umfasst ist, wobei der Stützring mit dem Distanzausgleichsblechteil und der Metallscheibe in unmittelbarem Kontakt steht;
b) Die Dichtung umfasst einen Stützabschnitt, mit dem sie sich auf dem Kontaktblechteil oder auf einem Bereich des Distanzausgleichsblechteils abstützt.

Der Stützring bzw. der Stützabschnitt erfüllen eine Sicherungsfunktion, sie verhindern nämlich, dass das Distanzausgleichsblechteil und/oder das Kontaktblechteil im Falle eines Druckanstiegs im Gehäuse gemeinsam mit der Metallscheibe angehoben wird, was im Zusammenhang mit der erwähnten CID-Funktion erforderlich ist.

Die Distanzausgleichsstruktur kann zum Zwecke der Bereitstellung der CID-Funktion eine den Verbindungsbereich der Distanzausgleichsstruktur flankierende oder sogar definierende Materialschwächung, insbesondere eine Nut, aufweisen.

Darüber hinaus kann es vorteilhaft sein, wenn die Metallscheibe als PRV (pressure relief valve) ausgebildet ist und zu diesem Zweck eine Materialschwächung, beispielsweise eine ring- oder kreisringförmige Schwächungsnut, umfasst.

Auch auf das PVR wird weiter unten noch im Detail eingegangen.

Die oben genannten Aufgabe wird bei dem Verfahren durch folgende Schritte gelöst:
(H) Stauchen der Randstreifen in axialer Richtung oder Umbiegen der Randstreifen, insbesondere vor oder bei der Durchführung von Schritt (D);
(I) Durchführen der Schritte (D), (E) und (F) und (H) außerhalb des Gehäusebechers, so dass ein Deckel-Wickel-Verbund ausgebildet wird;
(K) Einbringen des Deckel-Wickel-Verbundes und der Dichtung in den Gehäusebecher vor der Durchführung von Schritt (G).

Erfindungsgemäß wurde erkannt, dass es der Wegfall einer Werkzeug-Eingreifstruktur vorteilhaft ermöglicht, einen Deckel-Wickel-Verbund als Baugruppe vorzufertigen und erst hiernach in den Gehäusebecher einzubringen.

Mit Blick auf die CID-Funktion und die Varianten der Distanzausgleichsstruktur ist es dabei vorteilhaft, wenn
(L) die Distanzausgleichsstruktur durch das Distanzausgleichsblechteil bereitgestellt wird und in Schritt (F) die Deckelbaugruppe mit der Distanzausgleichstruktur und das Distanzausgleichsblechteil mit dem Kontaktblechteil verbunden wird;
   oder
(M) die Distanzausgleichsstruktur durch das Kontaktblechteil bereitgestellt wird und in Schritt (F) die Deckelbaugruppe mit der Distanzausgleichstruktur verbunden wird.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: einen Längsschnitt einer Energiespeicherzelle gemäß dem Stand der Technik, welches ein Gehäuse mit einer Werkzeug-Eingreifstruktur in Form einer umlaufenden Werkzeug-Eingreifsicke umfasst;
- Figur 2: einen Elektroden-Separator-Verbund sowie dessen Komponenten;
- Figur 3: einen der Figur 1 entsprechenden Längsschnitt einer erfindungsgemäßen Energiespeicherzelle mit einem Gehäuse ohne Werkzeug-Eingreifstruktur gemäß einem ersten Ausführungsbeispiel;
- Figur 4: einen Längsschnitt einer erfindungsgemäßen Energiespeicherzelle mit einer Abwandlung des Ausführungsbeispiels gemäß Figur 3;
- Figur 5: einen der Figur 1 entsprechenden Längsschnitt einer erfindungsgemäßen Energiespeicherzelle gemäß einem zweiten Ausführungsbeispiel;
- Figur 6: einen der Figur 1 entsprechenden Längsschnitt einer erfindungsgemäßen Energiespeicherzelle gemäß einem dritten Ausführungsbeispiel;
- Figur 7: einen der Figur 1 entsprechenden Längsschnitt einer erfindungsgemäßen Energiespeicherzelle gemäß einem vierten Ausführungsbeispiel.

### BESCHREIBUNG BEVORZUGTER AUSFÜHRUNGSBEISPIELE

### 1. Energiespeicherzelle nach dem Stand der Technik

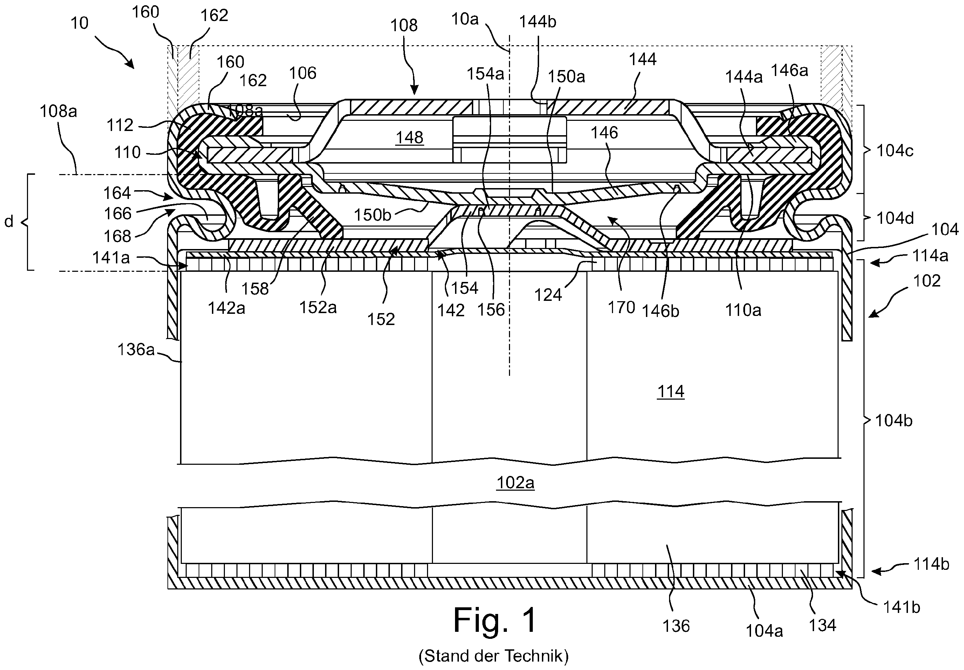

**Figur 1** zeigt ein Energiespeicherelement exemplarisch in Form einer Energiespeicherzelle 10 mit einem Grundaufbau, wie er beispielsweise aus der oben genannten europäischen Patentanmeldung Nr. 23190399.8 der Anmelderin bekannt ist.

Die Energiespeicherzelle 10 umfasst ein luft- und flüssigkeitsdicht verschlossenes Gehäuse 102, das einen Innenraum 102a begrenzt und eine Längsachse 10a der Energiespeicherzelle 10 definiert. Das Gehäuse 102 umfasst einen metallischen Gehäusebecher 104, der eine endständige kreisförmige Öffnung 106 hat. Der Gehäusebecher 104 umfasst in axialer Richtung einen Boden 104a, einen zylindrischen Zentralabschnitt 104b und einen Verschlussabschnitt 104c. Außerdem umfasst das Gehäuse 102 eine Deckelbaugruppe 108, welche in dem Verschlussabschnitt 104c angeordnet ist und die Öffnung 106 verschließt. Die Deckelbaugruppe 108 umfasst einen umlaufenden äußeren Verschlussring 110, der sich quer zur Längsachse 10a der Energiespeicherzelle 10 erstreckt. Die Energiespeicherzelle 10 weist ferner eine Dichtungsanordnung mit einer ringförmigen Dichtung 112 aus einem elektrisch isolierenden Material auf, welche die Deckelbaugruppe 108 radial umgibt und gegen den Gehäusebecher 104 abdichtet. Beim vorliegenden Ausführungsbeispiel umschließt die Dichtung 112 den Verschlussring 110 der Deckelbaugruppe 108 und isoliert den Gehäusebecher 104 und die Deckelbaugruppe 108 elektrisch voneinander.

Eine Verschlussebene 108a der Deckelbaugruppe 108 ist durch die zum Innenraum 102a des Gehäuses 102 weisende Innenseite 110a des Verschlussrings 110 der Deckelbaugruppe 108 begrenzt.

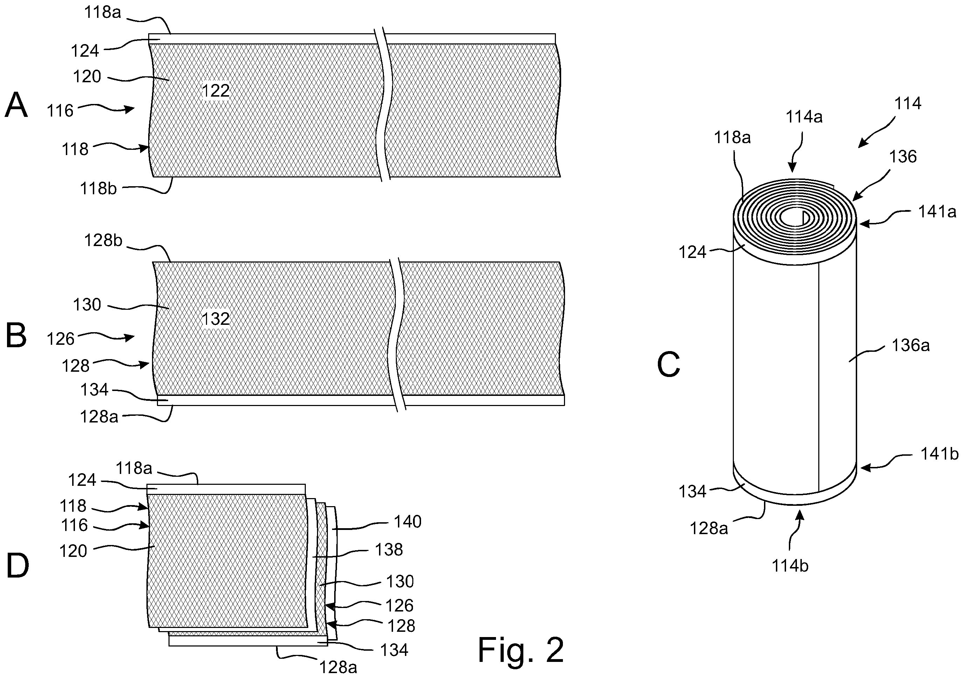

Die Energiespeicherzelle 10 umfasst einen Elektroden-Separator-Verbund 114, der in dem Gehäusebecher 104 untergebracht ist und dessen Aufbau in **Figur 2** veranschaulicht ist.

Der Elektroden-Separator-Verbund 114 umfasst eine bandförmige Anode 116 mit einem bandförmigen Anodenstromkollektor 118, der einen ersten Längsrand 118a und einen dazu parallelen zweiten Längsrand 118b aufweist. Bei dem Anodenstromkollektor 118 handelt es sich um eine Folie aus Kupfer oder Nickel. Der Anodenstromkollektor 118 hat einen bandförmigen Hauptbereich 120, der mit einer Schicht aus negativem Elektrodenmaterial 122 beladen ist, sowie einen freien Randstreifen 124, der den ersten Längsrand 118a des Anodenstromkollektors 118 umfasst und nicht mit dem negativen Elektrodenmaterial 122 beladen ist.

Weiterhin umfasst der Elektroden-Separator-Verbund 114 eine bandförmige Kathode 126 mit einem bandförmigen Kathodenstromkollektor 128, der einen ersten Längsrand 128a und einen dazu parallelen zweiten Längsrand 128b aufweist. Bei dem Kathodenstromkollektor 128 handelt es sich um eine Aluminiumfolie. Der Kathodenstromkollektor 128 hat einen bandförmigen Hauptbereich 130, der mit einer Schicht aus positivem Elektrodenmaterial 132 beladen ist, sowie einen freien Randstreifen 134, der den ersten Längsrand 128a des Kathodenstromkollektors 128 umfasst und nicht mit dem positiven Elektrodenmaterial 132 beladen ist.

Die Figuren 2A und 2B stellen die Anode 116 bzw. die Kathode 126 jeweils einzeln in einem ungewickelten Zustand dar. Figur 2C veranschaulicht den Elektroden-Separator-Verbund 114 in Form des Wickels 136, wie er in einer Energiespeicherzelle 10 zum Einsatz kommen kann und bei dem die Anode 116 und die Kathode 126 aufgewickelt sind. Der Wickel 136 umfasst zudem einen ersten und einen zweiten bandförmigen Separator 138 bzw. 140, welche die Anode 116 und die Kathode 126 im Wickel 136voneinander trennen. In dem Wickel 136 ergibt sich beim vorliegenden Ausführungsbeispiel auf diese Weise eine sich wiederholende Sequenz Anode 116 / Separator 138 / Kathode 126 / Separator 140, wobei abhängig von der äußeren Lage bei der Sequenz mit der Anode 116 oder der Kathode 126 begonnen wird. Ein Wickelmantel 136a ist durch eine Kunststofffolie gebildet.

Die Separatoren 138 und 140 sind in Figur 2D zu erkennen, die außerdem veranschaulicht, dass die Anode 116 und die Kathode 126innerhalb des Wickels 136 in der Weise versetzt zueinander angeordnet sind, dass der freie Randstreifen 124 mit dem ersten Längsrand 118a des Anodenstromkollektors 118 aus einer ersten endständigen Stirnseite 114a und der freie Randstreifen 134 mit dem ersten Längsrand 128a des Kathodenstromkollektors 128 aus der zweiten endständigen Stirnseite 114b des Elektroden-Separator-Verbunds 114 austritt.

Auf diese Weise bildet der freie Randstreifen 124 des Anodenstromkollektors 118 einen Überstand 141a an der ersten Stirnseite 114a des Elektroden-Separator-Verbundes 114. In entsprechender Weise bildet der freie Randstreifen 134 des Kathodenstromkollektors 128 einen Überstand 141b an der zweiten Stirnseite 114b des Elektroden-Separator-Verbundes 114. Beide Überstände sind hier unkomprimiert dargestellt.

Diese Stirnseiten 114a und 114b sind somit auch die entsprechenden Stirnseiten des Wickels 136. Figur 2C zeigt den Wickel 136 und dessen Komponenten in seiner Wickelkonfiguration, bei der insbesondere der Randstreifen 124 des Anodenstromkollektors 118 und der Randstreifen 134 des Kathodenstromkollektors 128 - und somit die durch die freien Randstreifen 124 und 134 gebildeten Überstände 141a und 141b - kräftemäßig unbelastet und frei in bezogen auf den Wickel 136 axialer Richtung abragen.

In der Energiespeicherzelle 10 ist der Kathodenstromkollektor 128 des Wickels 134 mit seinem freien Randstreifen 134 bevorzugt über seine gesamte Länge unmittelbar mit dem Boden 104a des Gehäusebechers 104 verschweißt. In anderen Ausführungsformen kann der Randstreifen 134 mit einer Metallplatte verschweißt sein, die flach auf dem Randstreifen aufsitzt und die wiederum elektrisch mit dem Boden 104 verbunden ist, beispielsweise ebenfalls durch Verschweißung.

Der Anodenstromkollektor 118 des Wickels 134 ist mit seinem freien Randstreifen 124 durch Verschweißen mit einem Kontaktblechteil 142 verbunden, das mit einem ringförmigen Kontaktierungsbereich 142a auf dem freien Randstreifen 124, insbesondere dem ersten Längsrand 128a des Anodenstromkollektors 118, aufsitzt und die erste endständige Stirnseite 114a des Elektroden-Separator-Verbundes 114 bzw. des Wickels 136 abdeckt.

Bei einer Abwandlung kann der Einbau des Wickels 136 in dieser Weise auch umgekehrt erfolgen. In diesem Fall ist also der Anodenstromkollektor 118 mit seinem freien Randstreifen 124 mit dem Boden 104a des Gehäusebechers 104 verschweißt, wogegen der Kathodenstromkollektor 128 mit dem Kontaktblechteil 142 verbunden ist.

Die Deckelbaugruppe 108 der Energiespeicherzelle 10 umfasst eine von außen zugängliche Polkappe 144, die über einen äußeren Ringbereich 144a elektrisch leitend mit einer dazu komplementär ausgebildeten Metallscheibe 146 verbunden ist und auf dieser aufsitzt, wobei zwischen der Polkappe 144 und der Metallscheibe 146 ein Zwischenraum 148 verbleibt. Bei den hier erläuterten Ausführungsbeispielen ist der äußere Randbereich 146a der Metallscheibe 146 außen um den Ringbereich 144a der Polkappe 144 umgeschlagen, wodurch der Verschlussring 110 der Deckelbaugruppe 108 gebildet ist. Die Metallscheibe 146 begrenzt den Innenraum 102a des Gehäuses 102 und definiert so eine vom Innenraum 102a wegweisende Außenseite 150a und eine zum Innenraum 102a weisende Innenseite 150b.

Die Metallscheibe 146 ist zudem als PRV (pressure relief valve) ausgebildet und umfasst zu diesem Zweck eine ringförmige Materialschwächung, die beim vorliegenden Ausführungsbeispiel durch eine kreisförmige langgestreckte Schwächungsnut 146b ausgebildet ist. Wenn der Druck im Inneren des Gehäuses 102 einen vordefinierten Grenzwert überschreitet, reißt die Metallscheibe 146 entlang der Nut 146b auf.

Zwischen der Metallscheibe 146 der Deckelbaugruppe 108 und dem Kontaktblechteil 142 auf dem Wickel 134 ist ein Distanzausgleichsblechteil 152 angeordnet, das einen ringförmigen Kontaktierungsbereich 152a aufweist, mit dem es auf das Kontaktblechteil 142 aufgeschweißt ist. Der ringförmige Kontaktierungsbereich 152a geht nach radial innen in eine Distanzausgleichsstruktur 154 über, die sich aus der Ebene des Kontaktierungsbereichs 152a heraus domartig in Richtung auf die Metallscheibe 146 erstreckt. Die Distanzausgleichsstruktur 154 ist in einem Verbindungsbereich 154a durch Verschweißung mit der Innenseite 146b der Metallscheibe 146 verbunden ist, die unmittelbar auf diesem Verbindungsbereich 154a aufliegt. Der Verbindungsbereich 154a des Distanzausgleichsblechteils 152 ist durch eine ring- oder kreisringförmige Nut 156 begrenzt, die den Verbindungsbereich 154a umgibt.

Diese Nut 156 in der Distanzausgleichsstruktur 154 ist ein Beispiel für eine Materialschwächung, welche den Verbindungsbereich 154a flankiert und die sogenannte CID-Funktion (current interrupt device) gewährleistet. Wenn der Druck im Inneren des Gehäuses 102 ansteigt, wölbt sich die Metallscheibe 146 nach außen. Aufgrund der Schweißverbindung zwischen der Metallscheibe 146 und der Distanzausgleichsstruktur 154 übt die sich wölbende Membran eine Zugkraft auf die Distanzausgleichsstruktur 154 des Distanzausgleichsblechteils 152 aus. Wenn diese Kraft stark genug ist, wird dessen Verbindungsbereich 154a entlang der Nut 156 aus der Distanzausgleichsstruktur 154 herausgerissen. Dadurch werden der direkte Kontakt und die elektrische Verbindung zwischen der Metallscheibe 146 und dem Distanzausgleichsblechteil 152 unterbrochen und es verbleibt ein Loch im oberen Teil der Distanzausgleichsstruktur 154.

Das Distanzausgleichsblechteil 152 und das Kontaktblechteil 142 können im Übrigen auch durch ein Bauteil ersetzt werden, das die Funktionen beider Elemente übernimmt. So wäre es beispielsweise möglich, unter Verzicht auf das Kontaktblechteil 142 den Kontaktierungsbereich 152a unmittelbar auf den Randstreifen 124 aufzuschweißen. Dies gilt grundsätzlich auch für erfindungsgemäßen Zellen, insbesondere die nachstehend beschriebenen.

Damit die Metallscheibe 146 und das Distanzausgleichsblechteil 152 von außen her miteinander verschweißt werden können, weist die Polkappe 144 zusätzlich zu weiteren, nicht gesondert bezeichneten Durchbrechungen insbesondere ein Durchgangsloch 144b auf, durch welchen die Metallscheibe 146 im Überlappungsbereich zum Verbindungsbereich 154a des Distanzausgleichsblechteils 152 für einen Laser von außerhalb des Gehäuses 102 zugänglich ist.

Die Energiespeicherzelle 10 umfasst außerdem einen Stützring 158, der zwischen der Metallscheibe 142 und dem Distanzausgleichsblechteil 152 eingeklemmt ist. Der Stützring 158 liegt auf dem ringförmigen Kontaktierungsbereich 152a des Distanzausgleichsblechteils 152 auf und drückt von unten gegen die Metallscheibe 146 in deren äußeren Randbereich 146a. Vorliegend ist der Stützring 158 ein Teil der Dichtung 112, was aber nicht zwingend so sein muss.

Der Stützring 158 stellt eine weitere Sicherheitsfunktion bereit: Es besteht nämlich die Gefahr, dass bei einem Druckanstieg im Gehäuse 102 durch die oben erläuterte Zugkraft auf die Distanzausgleichsstruktur 154 das ganze Distanzausgleichsblechteil 152 als solches, gegebenenfalls zusammen mit dem Kontaktblechteil 142, angehoben wird, ohne dass der Verbindungsbereich 154a ausreißt. In diesem Fall funktioniert das CID nicht.

Durch den Stützring 158 wird aber solch eine Situation vermieden. Falls sich die Metallscheibe 146 nach außen wölbt, hält der Stützring 158 das Distanzausgleichsblechteil 152 an seinem Platz und stellt ein Ausreißen des Verbindungsbereichs 154a sicher, wodurch die Funktion des CID gewährleistet ist.

Zum Verschließen der kreisförmigen Öffnung 106 des Gehäusebechers 104 durch die Deckelbaugruppe 108 wird insbesondere auf ein herkömmliches Bördelungsverfahren zurückgegriffen. Der Gehäusebecher 104 hat einen freien Endabschnitt 160, der vor dem Verschließen zunächst zylindrisch oder eventuell auch leicht konisch ist; dies illustriert Figur 1 mit gestrichelten Linien. Auch die Dichtung 112 hat einen mit 162 bezeichneten freien Endabschnitt, der bevorzugt vor dem Verschließen radial innen neben dem Endabschnitt 160 des Gehäusebechers 104 verläuft; auch dies zeigt Figur 1 mit gestrichelten Linien.

Bei dem Bördelungsverfahren wird der freie Endabschnitt 160 des Gehäusebechers 140 radial nach innen umgebogen, wobei die Dichtung 112 von dem freien Endabschnitt 106 mitgenommen wird und dabei um den Verschlussring 110 der Deckelbaugruppe 108 umgeschlagen wird. Im Ergebnis ist die Dichtung 112 durch den freien, radial nach innen umgebogenen Endabschnitt 160 des Gehäusebechers 104 in axialer Richtung gegen den die Deckelbaugruppe 108 komprimiert.

Um dabei in Richtung Becherboden 104a wirkende Axialkräfte von dem Wickel 136 bzw. dem Elektroden-Separator-Verbund 114 fernzuhalten, weist das Gehäuse 102 in axialer Richtung zwischen dem Zentralabschnitt 104b und dem Verschlussabschnitt 104c einen Werkzeug-Abschnitt 104d auf, in welchem in dem Gehäusebecher 104 eine Werkzeug-Eingreifstruktur 164 ausgebildet ist.

Die Werkzeug-Eingreifstruktur 164 hat die Funktion, dass sie eine Ausprägung in radialer Richtung in den Inneraum 102a des Gehäuses hinein hat, so dass an das Gehäuse 102 ein Werkzeug angesetzt werden kann, wenn die Öffnung 106 bzw. der Gehäusebecher 104 verschlossen wird. In die Werkzeug-Eingreifstruktur 164 greift beim Verschließen der Öffnung 106 von außen ein Konter-Werkzeug ein, welches den Gehäusebecher 104 in axialer Richtung gegen die beim Bördelungsverfahren einwirkende Kraft abstützt und diese Kraft ableitet, so dass der Wickel 136 weitgehend frei von einer Krafteinwirkung bleibt.

Damit ein entsprechendes Werkzeug an das Gehäuse 102 angesetzt werden kann, nimmt die Werkzeug-Eingreifstruktur 164 einen Bereich des Gehäuseinnenraums 102a ein, der auf Grund des dadurch verringerten Querschnitts nicht mehr für den Wickel 136 zur Verfügung steht. Die Position der Werkszeug-Eingreifstruktur 164 in axialer Richtung bestimmt den Abstand d zwischen den Hauptbereichen 120, 130 der Anode 116 bzw. Kathode 126 und derVerschlussebene 108a der Deckelbaugruppe 108, der in Figur 1 mit d bezeichnet ist.

Die axialen Erstreckungen der Deckelbaugruppe 108 sowie des Distanzausgleichsblechteils 152 und des Kontaktblechteils 142 sind auf diesen Abstand d abgestimmt. Insbesondere die domartige Distanzausgleichsstruktur 154 des Distanzausgleichsblechteils 152 überbrückt dabei den Zwischenraum 170 zwischen dem Kontaktblechteil 142 und der Innenseite 150b der Metallscheibe 146, in den die Werkzeug-Eingreifstruktur 164 einragt.

Bei der in Figur 1 gezeigten Energiespeicherzelle 10 ist die Werkzeug-Eingreifstruktur 164 durch eine radial nach innen weisende, in Umfangsrichtung vollständig umlaufende Sicke 166 ausgebildet, die eine Werkzeug-Eingreifsicke 168 bereitstellt. Es sind aber auch andere Strukturen denkbar.

Beim Aufbau dieser Energiespeicherzelle 10 wird die Werkzeug-Eingreifstruktur 164 und hier konkret die Werkzeug-Eingreifsicke 168 erst erzeugt, nachdem der Wickel 136 bereits in dem Innenraum 102a des Gehäuses 102 angeordnet worden ist. Ansonsten würde der Wickel 136 gegen die Werkzeug-Eingreifsicke 168 anstoßen und der Weg in den Innenraum 102a wäre auf Grund des dort geringeren Querschnitts versperrt. Die Deckelbaugruppe 108 wird dann mit der Dichtung 112 auf die Werkzeug-Eingreifsicke 168 aufgesetzt und es erfolgt der Bördelungsvorgang.

Zu beachten ist hierbei weiterhin, dass die dargestellte Sicke eine leichte Hinterschneidung aufweist. Diese kann Resultat einer Höhenkalibrierung sein, die beispielsweise beim Bördeln oder auch danach erfolgen kann. Bevorzugt wird die Sicke 166 für den Eingriff des Werkzeugs zunächst ohne die sichtbare Hinterschneidung ausgebildet. Die Hinterschneidung wird erst bei der Kalibrierung gebildet.

### 2. Erfindungsgemäße Energiespeicherzellen

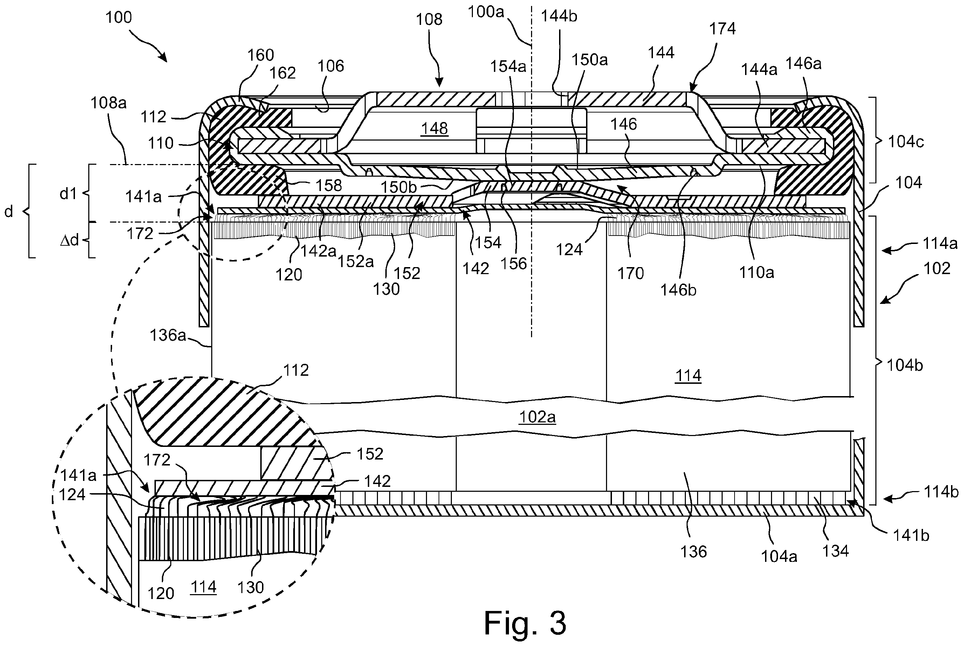

Die **Figuren 3 bis 7** veranschaulichen erfindungsgemäße Energiespeicherzellen 100, wobei funktional entsprechende Komponenten und Bauteile dieselben Bezugszeichen tragen, wie bei der Energiespeicherzelle 10 gemäß Figur 1; lediglich die Längsachse trägt nun das Bezugszeichen 100a. Zu diesen Bauteilen und Komponenten gilt das zur Energiespeicherzelle 10 zu den Figuren 1 und 2 Gesagte entsprechend, sofern nicht etwas anderes erläutert wird.

Bei der erfindungsgemäßen Energiespeicherzelle 100 ist der durch den Randstreifen 124 des Anodenstromkollektors 118 gebildete Überstand 141a zwischen dem Hauptbereich 120 des Anodenstromkollektors 118 und dem Kontaktblechteil 142 in bezogen auf den Wickel 136 axialer Richtung komprimiert. Insbesondere ist hierzu der Randstreifen 124 gestaucht und/oder umgebogen. Dies veranschaulicht Figur 3 anhand der dortigen Ausschnittsvergrößerung. Dieser in axialer Richtung komprimierte Überstand 141a des Anodenstromkollektors 118 ist gesondert mit 172 bezeichnet. Die erfindungsgemäße Energiespeicherzelle 100 umfasst folglich einen Elektroden-Separator-Verbund 114 mit einem in axialer Richtung komprimierten Überstand 172. Bei der in den Figuren gezeigten Anordnung des Wickels 136 ist dieser komprimierte Überstand 172 der durch den Randstreifen 124 gebildete Überstand 141a des Anodenstromkollektors 118; bei der oben erläuterten umgekehrten, hier nicht eigens gezeigten Anordnung des Wickels 136 ist der komprimierte Überstand 172 der durch den Randstreifen 134 gebildete Überstand 141b des Kathodenstromkollektors 128.Der Wickel 136 ist mit einem Teileinblick auf den Anoden-Hauptbereich 120 und den Kathoden-Hauptbereich 130 gezeigt, bei dem die Separatoren 138, 140 der Übersichtlichkeit halber jedoch nicht dargestellt sind.

Das Umbiegen kann zum Beispiel in der Weise erfolgen, wie es in der oben erwähnten europäischen Patentanmeldung Nr. 23202968.6 beschrieben ist, indem die äußeren freien Windungen des Randstreifens 124 des Anodenstromkollektors 118 radial nach innen umgebogen werden und zudem mit den radial weiter innenliegenden Windungen des Randstreifens 124 beim Aufsetzten des Kontaktblechteils 142 vor dem Verschweißen gleichsam verpresst werden. Beispielsweise kann der Randstreifen um einen Winkel im Bereich von 30-90° umgebogen werden. Der Randstreifen kann hierzu auch eingeschnitten werden, was allerdings nicht zwingend erforderlich ist.

Eine Stauchung kann beispielsweise erfolgen, indem das Kontaktblech derart auf den Randstreifen aufgepresst wird, dass dieser deformiert wird. In vielen Fälle resultiert dies nicht in einem gerichteten Umknicken, sondern in einer ungerichteten Stauchung. So können Abschnitte des Randstreifens radial nach außen und andere Abschnitte radial nach innen umgeknickt werden.

Sowohl die Biegung als auch die Stauchung führen zu einer Auflagefläche, die von einem in Folge des Umbiegens und/oder der Stauchung verdichteten bzw. verfestigten Überstand gebildet wird.

Allgemein ausgedrückt hat ein in axialer Richtung komprimierter Überstand 172 eine höhere Stabilität und Belastbarkeit gegen Kräfte, die in axialer Richtung auf den komprimierten Überstand 172 wirken, als es bei einem Überstand 141a, 141b in der oben zur **Figur 2** erläuterten unbelasteten Wickelkonfiguration der Fall ist.

Dabei hat der komprimierte Überstand 172 eine geringere axiale Erstreckung als ein Überstand 141a, 141b in der besagten Wickelkonfiguration. Die axiale Erstreckung eines in axialer Richtung komprimierten Überstandes 172 beträgt dabei insbesondere zwischen 10% und 80%, vorzugsweise zwischen 15% und 60%, nochmals bevorzugt zwischen 15% und 50% und weiter bevorzugt zwischen 25% und 45% der axialen Erstreckung eines Überstandes 141a, 141b in der unbelasteten Wickelkonfiguration. Gegebenenfalls kann der komprimierte Überstand 172 auch auf eine axiale Erstreckung komprimiert sein, die weniger als 10% der axialen Erstreckung des Überstandes 141a, 141b in der unbelasteten Wickelkonfiguration beträgt.

Bei den hier gezeigten erfindungsgemäßen Energiespeicherzellen 100 ist der Gehäusebecher 104 ohne eine Werkzeug-Eingreifstruktur 164 ausgebildet. Es gibt also keine Werkzeug-Eingreifstruktur 164, sei es in Form einer Werkzeug-Eingreifsicke 166 oder in Form einer anderen Struktur mit entsprechender Funktion, die beim Verschließen der Öffnung 106 des Gehäusebechers 104 dazu dient, ein Werkzeug an dem Gehäusebecher anzusetzen, wie es oben erläutert wurde.

Durch den gestauchten oder umgebogenen Randstreifen 172 des Anodenstromkollektors 118 ist der Elektroden-Separator-Verbund 114, d.h. der Wickel 136 als solcher, aber auch mit dem aufgeschweißten Kontaktblechteil 142, ausreichend stabil, um den beim Verschließen wirkenden axialen Kräfte als Konterelement entgegenzuwirken, so dass der Endabschnitt 160 des Gehäusebechers umgebogen werden kann, ohne dass die Gefahr besteht, dass der Wickel 136 beschädigt wird.

Dabei kommen anderer Verschließverfahren zum Einsatz als bei einem Gehäuse mit Werkzeug-Eingreifstruktur. Beispielsweise kann ein radiales Umbiegen durch rotierende Walzen erfolgen, die den freien Endabschnitt 160 des Gehäusebechers 104 in Umfangsrichtung abfahren und dabei nach radial innen und in axialer Richtung auf den Becherboden 104a zu drücken. Hierbei können Arbeitsschritte entfallen, die bei einer Energiespeicherzelle 100 mit einem Gehäuse 102 mit Werkzeug-Eingreifstruktur 164 gegebenenfalls nötig sind, beispielsweise die oben erwähnte Höhenkalibrierung.

Dadurch, dass keine Werkzeug-Eingreifstruktur vorgesehen ist, kann der Gehäusebecher 104 vom Boden 104a bis zum Verschlussabschnitt 104c zylindrisch ausgebildet sein. Bezogen auf ein Gehäuse 102 mit Werkzeug-Eingreifstruktur 164, das ansonsten identisch ist, kann daher der Zwischenraum 170 zwischen dem Kontaktblechteil 142 und der Innenseite 150b der Metallscheibe 146 in axialer Richtung kürzer gehalten werden, wodurch der Wickel 136 in axialer Richtung länger ausgebildet sein kann. Ein in axialer Richtung längerer Wickel 136 führt zu einer Energiespeicherzelle 100 mit höherer Kapazität und Leistung bei ansonsten unveränderten Außenmaßen.

In **Figur 3** ist der axiale Abstand zwischen den Hauptbereichen 120, 130 der Anode 116 und der Kathode 126 und der Verschlussebene 108a der Deckelbaugruppe mit d1 bezeichnet. Zum Vergleich zeigt Figur 3 auch nochmals den entsprechenden Abstand d bei der Energiespeicherzelle 100 mit Werkzeug-Eingreifstruktur 164 gemäß Figur 1.

Wie ersichtlich ist, ist der Abstand d1 um Δd kleiner als der Abstand d und der erfindungsgemäß verwendete Wickel 136 hat eine um Δd größere axiale Erstreckung der Hauptbereiche 120, 130 der Anode 116 und der Kathode 126 als der Wickel 136 gemäß Figur 1. Die Deckelbaugruppe 108 und das Distanzausgleichsblechteil 152 sind an den nun in axialer Richtung verkürzten Zwischenraum 170 angepasst. Insbesondere die domartige Distanzausgleichsstruktur 154 des Distanzausgleichsblechteils 152 ist deutlich flacher ausgebildet, was ein Vergleich mit Figur 1 veranschaulicht. Beim vorliegenden Ausführungsbeispiel wurde auch die Metallscheibe 142 angepasst, die sich im von der Nut 146b radial außen begrenzten Bereich in Richtung auf das Distanzausgleichsblechteil 152 wölbt. Diese Wölbung fällt nun geringer aus, was ebenfalls ein Vergleich mit Figur 1 aufzeigt.

Das Gehäuse 102 der Energiespeicherzelle 100 ist bevorzugt zwischen 50 mm bis 150 mm lang bzw. hoch. Ihr Durchmesser liegt bevorzugt im Bereich von 15 mm bis 60 mm. In besonders bevorzugter Ausführungsform hat es das Format 21700.

Bei ansonsten unverändertem Gehäuse 102 können durch die Kombination eines erfindungsgemäß verwendeten Wickels 136 mit komprimierten Überstand 172 und dem erfindungsgemäßen Gehäuse 102 ohne Werkzeug-Eingreifstruktur Werte für d1 von beispielsweise zwischen 0,6 mm und 3,0 mm, insbesondere zwischen 0,8 mm und 2,5 mm, bevorzugt zwischen 1,0 mm und 2,0 mm und vorzugsweise zwischen 1,2 mm und 1,6 mm und Werte für Δd beispielsweise zwischen 1,2 mm und 2,5 mm, insbesondere zwischen 1,8 mm und 2,2 mm erreicht werden, um welche die Hauptbereiche 120, 130 der Anode 116 und der Kathode 126 in axialer Richtung länger ausgebildet werden können. Bei den gängigen Gehäusedimensionen mit einem Durchmesser des Wickels zwischen 15 mm und 60 mm ergibt sich bei diesen Werten von Δd zwischen eine Kapazitätserhöhung zwischen 1% und 3%.

Insgesamt hängen die Werte von d1, Δd und die resultierende Kapazitätserhöhung selbstverständlich von der Bauart und den Grunddimensionen des Energiespeicherelements ab.

Bei dem in Figur 3 gezeigten Ausführungsbeispiel ist der Stützring 158 wieder Teil der Dichtung 112. Dabei hat die Dichtung insbesondere einen C-förmigen Querschnitt, wobei der Stützring 158 durch den Schenkel der Dichtung 112 gebildet ist, der an der Innenseite 110a des Verschlussrings 110 der Deckelbaugruppe 108 anliegt. Diese Konfiguration zeigt Figur 3.

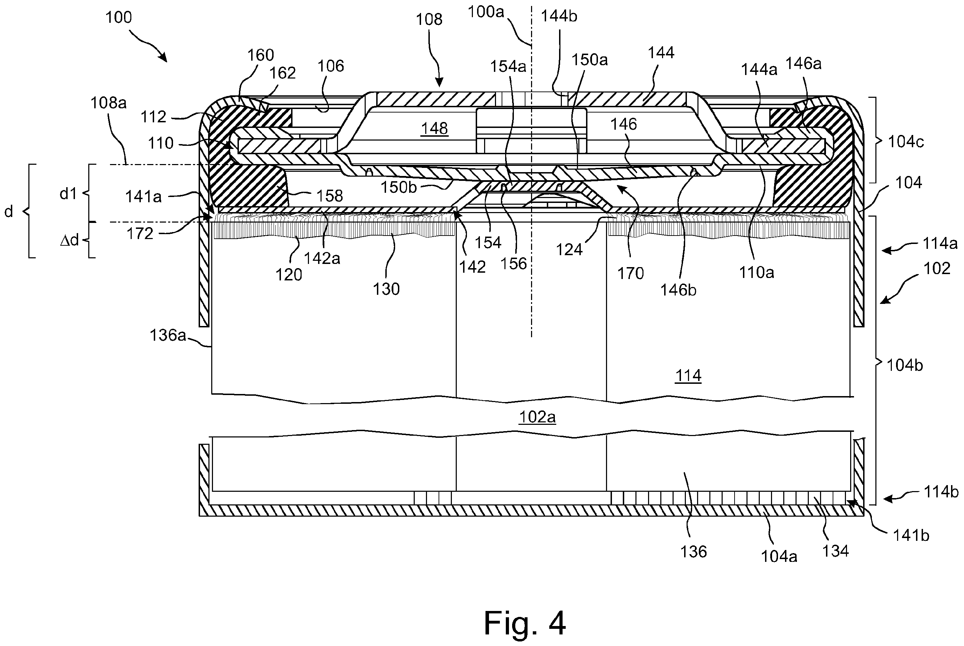

Figur 4 zeigt eine Abwandlung, bei der die Distanzausgleichsstruktur 154 durch das Kontaktblechteil 142 bereitgestellt ist. In diesem Fall ist das Kontaktblechteil 142 strukturell entsprechend dem Distanzausgleichsblechteil 152 ausgebildet und der ringförmige Kontaktierungsbereich 142a des Kontaktblechteils 142 geht nach radial innen in die Distanzausgleichsstruktur 154 über.

In diesem Fall sitzt der Stützring 158 unmittelbar auf dem Kontaktblechteil 142 auf. **Figur 4** zeigt diese Abwandlung bei unverändertem Abstand d1, wozu die Distanzausgleichsstruktur 154 eine entsprechende axialer Erstreckung hat. Die Dichtung 112 und der Stützring 158 sind hieran angepasst. Der Abstand d1 kann aber entsprechend nochmals verringert werden, indem die Distanzausgleichsstruktur 154 in der Weise flacher ausgebildet wird wie bei dem Distanzausgleichsblechteil 152, das in den Figuren 3, 5 und 6 gezeigt ist.

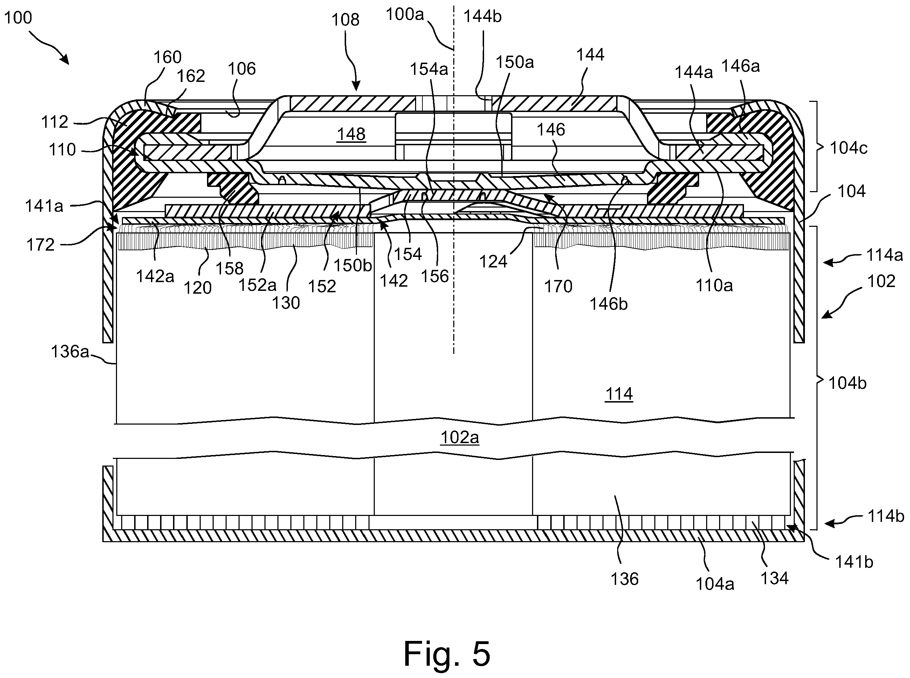

**Figur 5** zeigt ein zweites Ausführungsbeispiel der erfindungsgemäßen Energiespeicherzelle, bei welcher die Dichtung 112 und der Stützring 158 als separate Bauteile ausgebildet sind. Dabei verbleibt zwischen der Dichtung 112 und dem Kontaktblechteil 142 ein Abstand.

Bei der Abwandlung, bei der Distanzausgleichsstruktur 154 durch das Kontaktblechteil 142 bereitgestellt wird, sitzt der Stützring 158 in diesem Fall unmittelbar auf dem Kontaktblechteil 142 auf.

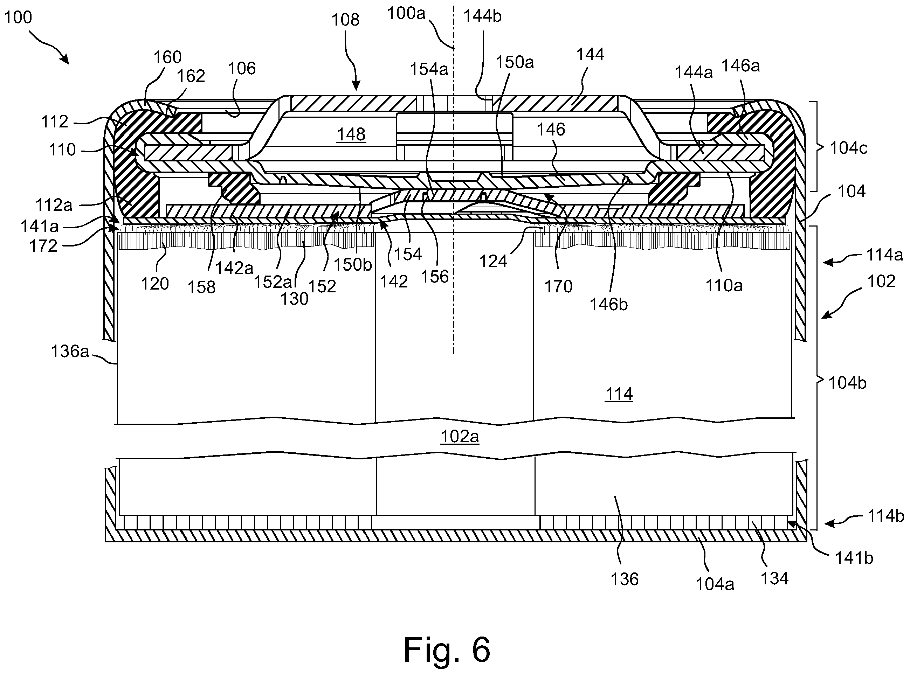

**Figur 6** zeigt ein drittes Ausführungsbeispiel der erfindungsgemäßen Energiespeicherzelle 100, bei der die Dichtung 112 und der Stützring 158 ebenfalls als separate Teile ausgebildet sind. Im Unterschied zum zweiten Ausführungsbeispiel stützt sich die Dichtung 112 auf dem Kontaktblechteil 142 ab und umfasst hierzu einen Stützabschnitt 112a. Der Stützabschnitt 112a der Dichtung 112 verläuft radial neben dem Distanzausgleichsblechteil 152, der sich in axialer Richtung zwischen der Innenseite 110a des Ringabschnitts 110 der Deckelbaugruppe 108 und dem Kontaktblechteil 142 erstreckt.

In diesem Fall kann auf den separaten Stützring 158 verzichtet werden, so dass der Stützabschnitt 112a der Dichtung 112 den Stützring 158 ausbildet, wenn die Distanzausgleichsstruktur 154 durch das Kontaktblechteil 142 bereitgestellt wird. Gegebenenfalls ist der Stützring 158 dann durch den Stützabschnitt 112a der Dichtung 112 so ausgebildet, dass er radial weiter innen auf dem Kontaktblechteil 142 aufsitzt.

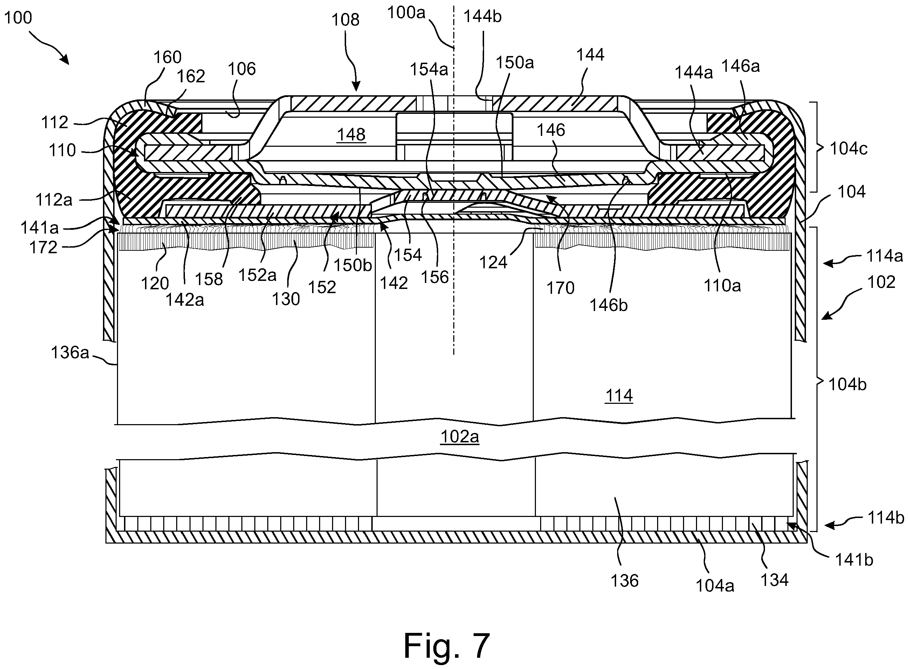

**Figur 7** zeigt ein viertes Ausführungsbeispiel der erfindungsgemäßen Energiespeicherzelle 100, bei der die Dichtung 112 sowohl den Stützabschnitt 112a als auch den Stützring 158 umfasst.

Durch den Wegfall der Werkzeug-Eingreifstruktur ist es zudem möglich, dass der Wickel 136 und die Deckelbaugruppe 108 bereits vor dem Einsetzen des Wickels 136 in das Gehäuse 102 miteinander verschweißt werden, da es keine Struktur gibt, die den Durchgang für den Wickel 136 in das Gehäuse 102 versperrt, wie es oben zur Figur 1 erläutert ist.

Dies eröffnet den Weg für das eingangs beschrieben Herstellungsverfahren, bei dem zunächst ein solcher Deckel-Wickel-Verbund, der lediglich in Figur 3 insgesamt mit 174 bezeichnet ist, gefertigt wird, der erst hiernach in den Gehäusebecher 104 eingebracht wird.

## Patentansprüche

1. Energiespeicherelement mit
a) einem Gehäuse (102), das eine Längsachse (100a) des Energiespeicherelements (100) und einen Innenraum (102a) definiert sowie einen metallischen Gehäusebecher (104) und eine Deckelbaugruppe umfasst, welche den Gehäusebecher (104) verschließt;
b) einer Dichtungsanordnung mit einer Dichtung (112), welche die Deckelbaugruppe (108) radial umgibt und gegen den Gehäusebecher (104) abdichtet, wobei die Dichtung (112) durch einen freien, radial nach innen umgebogenen Endabschnitt (160) des Gehäusebechers (104) gegen die Deckelbaugruppe (108) komprimiert ist;
c) einem Elektroden-Separator-Verbund (114) mit der Sequenz Anode (116) / Separator (138) / Kathode (126) / Separator (140), der in dem Gehäusebecher (104) untergebracht ist und in Form eines zylindrischen Wickels (136) vorliegt, wobei
c1) die Anode (116) einen Anodenstromkollektor (118) umfasst, der einen bandförmigen Hauptbereich (120) hat, der mit einer Schicht aus negativem Elektrodenmaterial (122) beladen ist, und der einen freien Randstreifen (124) hat, der nicht mit dem Elektrodenmaterial (122) beladen ist und einen ersten Längsrand (118a) des Anodenstromkollektors (118) umfasst, wobei der freie Randstreifen (124) aus einer ersten endständigen Stirnseite (114a) des Elektroden-Separator-Verbundes (114) austritt und an der ersten Stirnseite (114a) einen Überstand (141a) bildet;
c2) die Kathode (126) einen Kathodenstromkollektor (128) umfasst, der einen bandförmigen Hauptbereich (130) hat, der mit einer Schicht aus positivem Elektrodenmaterial (132) beladen ist, und der einen freien Randstreifen (134) hat, der nicht mit dem Elektrodenmaterial (132) beladen ist und einen ersten Längsrand (128a) des Kathodenstromkollektors (128) umfasst, wobei der freie Randstreifen (134) aus einer zweiten endständigen Stirnseite (114b) des Elektroden-Separator-Verbundes (114) austritt und an der zweiten Stirnseite (114b) einen Überstand (141b);
d) einem Kontaktblechteil (142), das
d1) auf dem Überstand (141a) des Anodenstromkollektors (118) aufsitzt und die erste endständige Stirnseite (114a) des Elektroden-Separator-Verbundes (114) abdeckt und mit diesem verbunden ist;
oder
d2) auf dem Überstand (141b) des Kathodenstromkollektors (128) aufsitzt und die zweite endständige Stirnseite (114b) des Elektroden-Separator-Verbundes (114) abdeckt und mit diesem verbunden ist;
**dadurch gekennzeichnet, dass**
e) der mit dem Kontaktblechteil (142) verbundene Überstand (141a, 141b) ein in axialer Richtung komprimierter Überstand (172) ist; und
f) der Gehäusebecher (104) ohne eine Werkzeug-Eingreifstruktur (164) ausgebildet ist.

2. Energiespeicherelement nach Anspruch 1, **dadurch gekennzeichnet, dass** die Deckelbaugruppe (108) eine Verschlussebene (108a) definiert und der axiale Abstand (d1) zwischen den Hauptbereichen (120, 130) der Anode (116) und der Kathode (118) und der Verschlussebene (108a) zwischen 0,6 mm und 3,0 mm, insbesondere zwischen 0,8 mm und 2,5 mm, bevorzugt zwischen 1,0 mm und 2,0 mm und vorzugsweise zwischen 1,2 mm und 1,6 mm beträgt.

3. Energiespeicherelement nach Anspruch 2, **dadurch gekennzeichnet, dass** die Deckelbaugruppe (108) einen umlaufenden äußeren Verschlussring (110) umfasst, der von der Dichtung (112) umschlossen ist, wobei die Verschlussebene (108a) durch die zum Innenraum (102a) des Gehäuses (102) weisende Innenseite (110a) des Verschlussrings (110) begrenzt ist.

4. Energiespeicherelement nach Anspruch 3, **dadurch gekennzeichnet, dass** die Deckelbaugruppe (108) eine Metallscheibe (146) umfasst, die mit einer Distanzausgleichstruktur (154) in einem Verbindungsbereich (154a) der Distanzausgleichsstruktur (154) verschweißt ist, die
a) durch ein Distanzausgleichsblechteil (152) bereitgestellt wird, das mit dem Kontaktblechteil (142) verbunden ist; oder
b) durch das Kontaktblechteil (142) bereitgestellt wird.

5. Energiespeicherelement nach Anspruch 4, **dadurch gekennzeichnet, dass** die Distanzausgleichsstruktur (154) durch das Distanzausgleichsblechteil (152) bereitgestellt wird und
a) ein Stützring (158) zwischen dem Distanzausgleichsblechteil (142) und der Metallscheibe (146) vorgesehen ist, der ein separates Bauteil ist oder von der Dichtung (112) umfasst ist;
b) zwischen dem Kontaktblechteil (142) und der Dichtung (112) in axialer Richtung ein Abstand verbleibt oder die Dichtung (112) einen Stützabschnitt (112a) umfasst, mit dem sie sich auf dem Kontaktblechteil (142) abstützt.

6. Energiespeicherelement nach Anspruch 4, **dadurch gekennzeichnet, dass** die Distanzausgleichsstruktur (154) durch das Kontaktblechteil (142) bereitgestellt wird und ein Stützring (158) zwischen dem Kontaktblechteil (142) und der Metallscheibe (146) vorgesehen ist, der ein separates Bauteil oder von der Dichtung (112) umfasst ist.

7. Energiespeicherelement nach Anspruch 5 oder 6, **dadurch gekennzeichnet, dass** die Distanzausgleichsstruktur (154) eine CID-Funktion bereitstellt und zu diesem Zweck insbesondere eine den Verbindungsbereich (154a) der Distanzausgleichsstruktur (154) flankierende Materialschwächung, insbesondere eine Nut (156), umfasst.

8. Energiespeicherelement nach einem der Ansprüche 5 bis 7, **dadurch gekennzeichnet, dass** die Metallscheibe (146) als PRV ausgebildet ist und zu diesem Zweck insbesondere eine Materialschwächung, insbesondere eine ring- oder kreisringförmige Schwächungsnut (156), umfasst.

9. Verfahren zur Herstellung eines Energiespeicherelements (100) nach einem der Ansprüche 1 bis 8 mit den folgenden Schritten:
(A) Bereitstellen des Gehäuses (102) mit dem metallischen Gehäusebecher (104) und der Deckelbaugruppe (108);
(B) Bereitstellen der Dichtungsanordnung mit der Dichtung (112) und Bereitstellen des Stützrings (158);
(C) Bereitstellen des Elektroden-Separator-Verbundes (114);
(D) Verbinden, insbesondere Verschweißen, des Kontaktblechteils (142) mit dem Randstreifen (124) des Anodenstromkollektors (118) oder mit dem Randstreifen (134) des Kathodenstromkollektors (128);
(E) Positionieren der Dichtung (112) und des Stützrings (158);
(F) Verbinden der Deckelbaugruppe mit dem Kontaktblechteil (142);
(G) Verschließen des Gehäusebechers (104);
**gekennzeichnet, durch** folgende Schritte:
(H) Stauchen der Randstreifen (124, 130) in axialer Richtung oder Umbiegen der Randstreifen (124, 130), vorzugsweise vor oder bei der Durchführung von Schritt (D);
(I) Durchführen der Schritte (D), (E) und (F) und (H) außerhalb des Gehäusebechers (104), so dass ein Deckel-Wickel-Verbund (174) ausgebildet ist;
(K) Einbringen des Deckel-Wickel-Verbundes (174) und der Dichtung (112) in den Gehäusebecher (104) vor der Durchführung von Schritt (G).

10. Verfahren nach Anspruch 9, **dadurch gekennzeichnet, dass**
(L) die Distanzausgleichsstruktur (154) durch das Distanzausgleichsblechteil (152) bereitgestellt wird und in Schritt (F) die Deckelbaugruppe (108) mit der Distanzausgleichstruktur (154) und das Distanzausgleichsblechteil (152 ) mit dem Kontaktblechteil verbunden wird;
oder
(M) die Distanzausgleichsstruktur (154) durch das Kontaktblechteil (142) bereitgestellt wird und in Schritt (F) die Deckelbaugruppe (108) mit der Distanzausgleichstruktur (154) verbunden wird.
